# EUROPÄISCHE PATENTSCHRIFT

(11) **EP 3 839 462 B1**
(45) Veröffentlichungstag und Bekanntmachung des Hinweises auf die Patenterteilung: **24.08.2022**
(21) Anmeldenummer: 19218820.9
(22) Anmeldetag: 20.12.2019
(51) Int. Cl.: G01L 5/101, G01L 5/102, G01M 13/023, F16G 1/12, F16G 1/28

(54) **ZAHNRIEMEN MIT INTEGRIERTER SENSORIK**
TOOTHED BELT WITH INTEGRATED SENSOR
CEINTURE DENTÉE AVEC CAPTEUR INTÉGRÉ

(43) Veröffentlichungstag der Anmeldung: 23.06.2021
(73) Patentinhaber: BRECO Antriebstechnik Breher GmbH & Co. KG, 32457 Porta Westfalica (DE); Technische Universität Darmstadt, 64289 Darmstadt (DE)
(72) Erfinder: Steinert, Thomas, Dr., 32545 Bad Oeynhausen (DE); Großkurth, Dominik, 65189 Wiesbaden (DE)
(74) Vertreter: Zenz Patentanwälte Partnerschaft mbB

(56) Entgegenhaltungen:
- DE-A1-102017 208 074
- US-A1- 2018 128 352
- US-B1- 6 523 400

## Beschreibung

Die Anmeldung betrifft einen Zahnriemen mit einer in den Zahnriemen integrierten elektronischen Sensorik. Insbesondere betrifft die Erfindung einen Zahnriemen mit wenigstens einem Zugträger und einer den Zugträger wenigstens teilweise ummantelnden Kunststoffmatrix. Der wenigstens eine Zugträger erstreckt sich innerhalb der Kunststoffmatrix in einer Laufrichtung des Zahnriemens. Quer zu der Laufrichtung sind in der Kunststoffmatrix Zähne des Zahnriemens ausgebildet. Der Zugträger ist aus einem elektrisch leitfähigen Material gebildet und die Kunststoffmatrix besteht aus einem elektrisch isolierenden Material. Der Zahnriemen weist wenigstens eine elektronische Komponente mit wenigstens einem Sensor auf, wobei die elektronische Komponente in die Kunststoffmatrix eingebettet oder in einer Schicht, z. B. als dünne Folie auf dem Riemenrücken befestigt ist. Der Sensor erfasst Daten zu einem Zustandsparameter des Zahnriemens.

Die Erfassung von Zustandsdaten oder Zustandsparametern in Maschinenelementen, Produkten und Prozessen ist grundsätzlich bekannt. Zahnriemen werden aufgrund ihrer mechanischen Beanspruchung und Einbaupositionen häufig nicht überwacht, stattdessen sind sie als Verschleißteile mit oft langer Lebensdauer meist Gegenstand eines vorsorglichen Austausches, auch wenn keine genaue Kenntnis des Nutzungs- und Verschleißzustands des Zahnriemens vorliegt. Dadurch werden Riemen, die eigentlich noch nicht austauschbedürftig sind, zu früh ausgetauscht und andererseits Riemen, die vorzeitig gealtert sind, nicht als austauschwürdig erkannt. Letzteres kann bei Versagen des Riemens zu Stillständen von Prozessen führen und erhebliche Schäden und Kosten verursachen. Gerade aber auch bei Zahnriemen, deren Austausch mit signifikanten Kosten verbunden sind, so dass sich Lagerhaltung im Sinne vorbeugender Instandhaltung aufgrund der Kapitalbindung verbietet oder der Riemenersatz erhebliche Zeit in Anspruch nimmt, wäre eine bessere Kenntnis des Zustandes des Riemens hilfreich.

Es ist aus der DE 10 2017 208 074 A1 ein Treibriemen für die Übertragung von Drehmomenten von einer Antriebsriemenscheibe zu einer Abtriebsriemenscheibe bekannt, welcher mindestens einen Draht oder mindestens ein Band aufweist, wobei der mindestens eine Draht oder das mindestens eine Band über mindestens die gesamte Länge des Treibriemens in das Matrixmaterial des Treibriemens eingebettet ist. Der Draht oder das Band ist aus einem superelastischen Metall gebildet, wobei außerdem eine Einrichtung zur Bestimmung des elektrischen Widerstandes über eine vorgegebene Weglänge entlang des mindestens einen Drahtes oder Bandes vorhanden ist.

Auch ist aus der US 6 523 400 B1 eine Vorrichtung zur Überwachung einer Zustandsänderung in einem Antriebsriemen bekannt, wobei die Vorrichtung eine erste Induktionsspule, eine zweite Induktionsspule und eine in den Antriebsriemen eingebettete, elektrisch leitende Schleife aufweist. Ein solcher leitfähiger Draht, welcher in Form einer geschlossenen Schleife in das Material des Antriebsriemens eingebettet ist, neigt dazu, eine Beschädigung typischerweise einige Zeit bevor ein Riemenbruch droht aufzuweisen. Die Leiterschleife bildet eine gegenseitige induktive Kopplung zwischen der ersten und der zweiten Induktionsspule. Ein Verstärker der Vorrichtung umfasst einen Eingang, der mit der ersten Spule gekoppelt ist, und einen Ausgang, der mit der zweiten Spule gekoppelt ist, welche gepolt ist, um eine Oszillation zu verursachen, wobei ein Detektor der Vorrichtung eine Veränderung der Oszillation erfasst.

Aus dem Stand der Technik ist ferner z. B. die DE 10 2017 104 402 A1 bekannt, die ein Verfahren zur Herstellung von Zahnriemen beschreibt. Dort ist auch vorgeschlagen, einen Sensor in den Zahnriemen einzubetten, welcher bestimmte Eigenschaften des Zahnriemens erfasst und an eine Signalerfassungseinrichtung weiterleitet. Aufgrund der mechanischen Belastung eines Zahnriemens ist dabei die Anordnung von Elektronik innerhalb eines Riemens problemanfällig, insbesondere wenn sich die Elektronik über Bereiche des Zahnriemens erstrecken soll, die signifikanten Zug- und Biegebelastungen ausgesetzt sind. Es ist eine Bestrebung, eine Sensorik in einem Zahnriemen in möglichst verlässlicher Weise einzubetten und mit Energie zu versorgen.

Aufgabe der Erfindung ist es daher, einen Zahnriemen der eingangs genannten Art derart zu verbessern, dass eine robuste und dauerhafte Energieversorgung von eingebetteten elektronischen Komponenten möglich ist.

Die Aufgabe wird gelöst durch einen Zahnriemen mit den Merkmalen des Patentanspruchs 1.

Gemäß der Erfindung ist die im Zahnriemen eingebettete wenigstens eine elektronische Komponente mit dem Sensor über wenigstens zwei Spannungsabgriffe mit dem mechanischen Zugträger gekoppelt. Eine in den Zugträger induzierte Spannung wird zur Speisung , d.h. zur Energieversorgung, der wenigstens einen elektronischen Komponente abgegriffen.

Gemäß der Erfindung wird also ein Doppelnutzen des eingebetteten, elektrisch leitfähigen Zugträgers erzielt, der in dem Zahnriemen umläuft. Die induktive Einkopplung einer Spannung in den Zugträger erfolgt dabei durch ein zum Zahnriemen externes Mittel, wobei nach dem Wirkprinzip eines Transformators Spannung in den Zugträger induziert wird. Der Sensor in der elektronischen Komponente des Zahnriemens wird durch die induzierte Spannung versorgt und kann seine Erfassung von Zustandsparametern, beispielsweise Temperaturwerten oder Beschleunigungswerten durchführen. Bedarfsweise kann die elektronische Komponente die Daten des Sensors dann in einem beschreibbaren Speicher ablegen oder drahtlos an externe Stellen übertragen. Eine Temperaturmessung gibt beispielsweise Aufschluss über den Verschleiß des Riemens, während Beschleunigungswerte z. B. nach einer Fast-FourierTransformation (FFT) zu Biegeeigenfrequenzen umrechenbar sind und so z. B. auf Vorspannungskraftverluste hinweisen und auch Ermüdungen anzeigen können. Die induktive Übertragung und Einkopplung der Spannung in den Zugträger erfolgt berührungslos, so dass jederzeit ein mechanisch unbeeinflusstes Wirken des Zahnriemens gewährleistet ist. Da der Zugträger für mechanische Belastungen ausgelegt ist, wird die Nutzung des Zugträgers als Induktionsspule keine besondere mechanische Auslegung erfordern. Außerdem wird durch die Doppelnutzung erreicht, dass die Versorgung durch ohnehin verfügbare Komponenten erfolgt, so dass in der Kunststoffmatrix keine Einbettung von separaten Versorgungsspulen erforderlich ist.

Um die induktive Kopplung und Versorgung zu ermöglichen, kann eine Primärspule in der Nähe des Zahnriemens angeordnet werden, welche ein wechselndes Magnetfeld aufbaut, das den Riemen durchgreift. Ein solches wechselndes Magnetfeld kann aber auch anders aufgebaut werden, z. B. durch bewegte Dauermagnete. Diese können z. B. an bewegten Teilen einer Apparatur befestigt werden, in welcher der Zahnriemen angeordnet ist. Diese Primärspule wird von einer Spannungsversorgung mit Wechselspannung versorgt. Das so in der Primärspule entstehende magnetische Feld muss die durch den Zugträger gebildete Spule durchgreifen, um eine Spannung in die Windung des Zugträgers zu induzieren. Dadurch wird eine Art Transformator aus der Primärspule und dem Zugträger gebildet. Hierbei kann die externe Spule mit einem Spulenkern versehen sein, um die Magnetfeldlinien und den magnetischen Fluss durch den Zugträger des Zahnriemens zu lenken und zu verstärken.

Die grundlegenden Konzepte eines Transformators und deren physikalische und technische Beschreibung sowie Größenberechnung sind hinlänglich bekannt, so dass an dieser Stelle auf eine diesbezügliche Erläuterung verzichtet wird. Wesentlich ist, dass der Zugträger des Zahnriemens als Sekundärspule eines Transformators eingesetzt wird, die über eine externe, ortsfeste Erregereinrichtung, z. B. eine Primärspule erregt wird, wodurch in den Zugträger und damit den Zahnriemen Spannung induziert wird.

Es ist insbesondere bekannt, dass die Höhe der induzierten Spannung einerseits von der Höhe der anliegenden Primärspannung an der externen Erregereinrichtung abhängt, andererseits auch vom Verhältnis der Windungszahlen von Primärspule und Sekundärspule, also dem Zugträger. Wird eine einfache Erfassungssensorik in der elektronischen Komponente des Zahnriemens angeordnet, ohne eine drahtlose Übertragung der erfassten Werte bereitzustellen, genügen üblicherweise schon geringe Leistungen zur Versorgung der entsprechenden Sensorik. Dann kann es bereits ausreichen, nur eine Windung des Zugträges im Zahnriemen als Sekundärspule zu verwenden (Wicklungsanzahl 1). Es können jedoch auch mehrere Windungen des Zugträgers als Sekundärspule eingesetzt werden. Falls nur geringe elektrische Leistungen erforderlich sind, können sogar elektromagnetische Wechselfelder, z. B. Störfelder, welche ohnehin im Bereich des Zahnriemens vorhanden sind, als Induktionsquelle und damit Energiequelle genutzt werden. Angesichts der dann fehlenden Kontrolle über die Frequenz und Ausrichtung dieser Störfelder könnte dann auch die Gestaltung der Sekundärseite, also des Zugträgers und der Elektronik hinsichtlich der Resonanzfrequenz an diese Felder angepasst werden, sofern die Kopplung nicht ausreichend ist. Bei einer gezielten Induktion mit einer bereitgestellten Erregereinrichtung, z. B. in Gestalt einer Primärspule, kann jedoch diese auf die Gestaltung des Zahnriemens angepasst und hinsichtlich Ihrer Ausrichtung und Speisefrequenz optimiert werden.

Die Erfindung ist grundsätzlich auf nicht-endlose Zahnriemen anwendbar, sofern die elektrische Kopplung des Zugträgers mit der elektronischen Komponente zusammen eine endlose Anordnung bildet, also insgesamt wenigstens eine Spulenwicklung auf der Sekundärseite vorhanden ist. Dies kann z. B. erreicht werden, indem ein endlicher Zahnriemen mit beiden Enden an ein anzutreibendes Element (z. B. einen Schlitten in einer Führung) gekoppelt ist und die Enden eines oder mehrerer Zugträger des Riemens mit der elektronischen Komponente gekoppelt werden, so dass diese elektronische Komponente das verbindende Element darstellt.

Vorzugsweise ist der Zahnriemen jedoch als endloser Zahnriemen ausgebildet. Ein solcher endloser Zahnriemen weist mehrere einfach umlaufende Zugträger auf oder auch einen spiralförmig gewundenen Zugträger, der mehrfach umläuft. Durch die geschlossene Form des endlosen Zahnriemens wird eine Spulenanordnung auf der Sekundärseite gebildet, welche besonders einfach handhabbar ist und mechanisch gekapselt und belastbar ist.

In einer bevorzugten Ausgestaltung der Erfindung ist die wenigstens eine elektronische Komponente in einem der Zähne des Zahnriemens angeordnet.

Die Platzierung der elektronischen Komponenten in einem der Zähne des Zahnriemens ermöglicht zunächst eine gute Ausnutzung des Bauraums im Zahnriemenkörper, da die Zähne eher großvolumige Materialabschnitte bereitstellen. Weiterhin sind die Zug- und Biegespannungen auf die elektronische Komponente dann minimal, da die Zähne quer zur Lastrichtung verlaufen und die Elektronik in einer langgestreckten Anordnung (z. B. auf einer schmalen Platine) entlang der Zahnrichtung angeordnet wird. Wird die elektronische Komponente entlang dieser Zahnerstreckung ausgerichtet, so wirken die Zugkräfte nur über einen vergleichsweise kurzen Abschnitt ein, nämlich entlang der Breite der elektronischen Komponente, welche in Umlaufrichtung des Zahnriemens und quer zur Zahnerstreckung verläuft.

In einer bevorzugten Ausgestaltung der Erfindung sind als Sensor innerhalb der elektronischen Komponente wenigstens ein Temperatursensor oder ein Beschleunigungssensor vorgesehen.

Wie oben bereits beschrieben, geben Temperaturdaten und Beschleunigungsdaten gute Auskunft über den Verschleiß des Riemens, ebenso wie über die Belastung des Riemens, um daraus eine Lebenszeitprognose zu berechnen. Die Daten können jederzeit sowohl für die Kalkulation einer voraussichtlichen Restlebensdauer als auch für die Erfassung des gegenwärtigen Zustandes des Riemens verwendet werden. Insbesondere Vergleiche mit historischen Messdaten können über die Veränderung der entsprechenden Parameter Auskunft geben und damit auch eine Verschlechterung des Zustandes des Riemens erkennen lassen.

Es ist weiterhin möglich, Komponenten zur Widerstandsmessung an den Zugträger zu koppeln. Solche Widerstandsmessungen können dazu beitragen, Schäden am Zugträger früh zu erkennen, da Faserrisse oder Dehnungen und Querschnittsänderungen zu Änderungen des elektrischen Widerstandes führen.

In einer bevorzugten Ausgestaltung der Erfindung weist die elektronische Komponente eine drahtlose Kommunikationseinrichtung auf, welche Daten von dem Sensor in einem elektromagnetischen Kommunikationssignal aussendet.

Ein solcher Riemen kann die aktuellen und ggf. auch die historischen Messdaten drahtlos weitergeben, was entweder im laufenden Betrieb geschehen kann oder in einem Wartungszustand. Dazu wird z. B. ein Lesegerät in die Nähe des Riemens gebracht, um nach einem beliebigen Standard der kurzreichweitigen Funktechnologie, beispielsweise einem Bluetooth-Standard oder auch dem NFC-Standard, eine Kommunikation zu etablieren.

Auf diese Weise ist eine besonders komfortable Erfassung der charakteristischen Riemenparameter möglich. Steht für eine solche drahtlose Verbindung jedoch nicht ausreichend Energie zur Verfügung, kann am Riemen über entsprechende galvanische Kontakte oder Steckverbinder eine Schnittstelle bereitgestellt sein, über welche ein Lesegerät die erforderlichen Daten abfragen kann.

In einer Weiterbildung der Erfindung weist der Zahnriemen in der elektronischen Komponente einen Energiespeicher und eine zugeordnete Ladeschaltung auf, um den Energiespeicher unter Spannungsversorgung durch die induzierte Spannung in dem Zugträger zu laden, wobei der Energiespeicher zur Versorgung des Sensors gekoppelt ist.

Die Anordnung eines Energiespeichers im Zahnriemen, beispielsweise in Gestalt eines Kondensators, erlaubt die Erfassung von Riemenparametern durch den Sensor auch während solcher Zeiten, während derer keine Spannung in den Riemen induziert wird. Dies ermöglicht es, Ausfallzeiten der externen Versorgung zu überbrücken oder diese gezielt nur für gewisse Perioden einzuschalten, beispielsweise um sonstige Steuervorgänge oder Erfassungen durch das bereitgestellte Feld nicht zu stören.

Es ist besonders bevorzugt, wenn der Zugträger derart in der Kunststoffmatrix ausgebildet ist, dass er entlang der Laufrichtung mehrere Umläufe aufweist und sich dabei entlang einer Schraubenlinie um eine Achse quer zur der Laufrichtung erstreckt, so dass der Zugträger in der Kunststoffmatrix eine Spule mit einer Mehrzahl von Windungen bildet.

Eine solche Gestaltung kann einerseits gebildet sein, indem ein spiralförmig gewickelter Zugträger durch eine Kunststoffmatrix umgeben wird, und andererseits, indem mehrere schlaufenförmige Zugträger bei dem Schluss eines Zahnriemens zu einem unendlichen Zahnriemen paarweise verbunden werden, um die schraubenlinienförmige Spule zu bilden. Entsprechend können Zahnriemen mit metallischen Zugträgern auf vielfältige Weise gefertigt und gemäß der Erfindung eingesetzt werden.

In einer Anordnung zur Nutzung eines erfindungsgemäßen Zahnriemens ist der Zahnriemen mit einem Antrieb gekoppelt und entlang eines Transportweges eingespannt. Entlang des Transportweges und benachbart zu dem Zahnriemen ist eine wechselspannungsversorgte Speisespule ortsfest platziert, wobei die Speisespule einen Spulenkern aufweist. Der Spulenkern umgreift den Zahnriemen entlang des Transportweges wenigstens abschnittsweise oder übergreift oder untergreift ihn, so dass durch die Speisespule, den Spulenkern und den Zugträger eine Transformatoranordnung gebildet ist.

Die Platzierung der Speisespule und die Anordnung und Gestaltung eines Spulenkerns ist abhängig von dem Einsatzbereich des Zahnriemens, da diese Versorgungseinrichtung den ordnungsgemäßen Betrieb und den mechanischen Wirkbereich des Zahnriemens nicht beeinträchtigen soll.

In einer anderen Ausgestaltung der Erfindung ist der Spulenkern ringförmig ausgebildet und der Transportweg des Zahnriemens verläuft durch eine innere Öffnung des Spulenkern-Riemens.

Diese Gestaltung gewährleistet eine besonders hohe Effizienz der Induktion und Energieübertragung von der Primärspule in den Zugträger als Sekundärspule und stellt nur wenige Streufelder im Bereich der Transformatoranordnung bereit. Eine Problematik der Zugänglichkeit des durch den Spulenkern geführten Zahnriemens kann gemindert werden, indem der Spulenkern mehrteilig und teilweise demontierbar ausgebildet ist, um den Zahnriemen in dem Spulenkern einführen zu können und ggf. auch wieder entnehmen zu können.

Eine vollständige Umschließung des Zahnriemens durch den Spulenkern in Gestalt eines klassischen geschlossenen Ringkerns eines Transformators gewährleistet die beste Induktionswirkung, es hat sich jedoch gezeigt, dass auch Abschnitte eines solchen Ringkerns in der Nähe des Zahnriemens ausreichen können, um die induzierte Spannung und verfügbare Leistung für die elektronische Komponente sicherzustellen.

In einer bevorzugten Gestaltung ist der Spulenkern U-förmig ausgebildet und der Transportweg des Zahnriemens führt zwischen den freien Schenkeln des Spulenkerns hindurch, so dass der Zahnriemen wenigstens abschnittsweise zwischen den freien Schenkeln angeordnet ist.

Eine solche Anordnung ermöglicht es, den Spulenkern jederzeit seitlich vom Zahnriemen abzuziehen, wobei der Zahnriemen in Richtung der offenen Seite des Spulenkerns bewegt wird. Ein Wartungszugriff oder ein Wechsel des Zahnriemens ist ebenfalls in besonders einfacher Weise möglich.

Die Erfindung wird nun anhand der beiliegenden Zeichnung näher erläutert.
Figur 1 zeigt schematisch eine Transformatorkopplung zwischen einem erfindungsgemäßen Zahnriemen und einer Speiseanordnung;
Figur 2 zeigt eine perspektivische Ansicht einer Ausführungsform eines erfindungsgemäßen Zahnriemens;
Figur 3 zeigt den Zahnriemen aus Figur 2 mit einer Primärspulenanordnung mit ringförmigem Spulenkern;
Figur 4 zeigt die Spule aus Figur 2 mit einer Primärspulenanordnung mit U-förmigem Spulenkern.

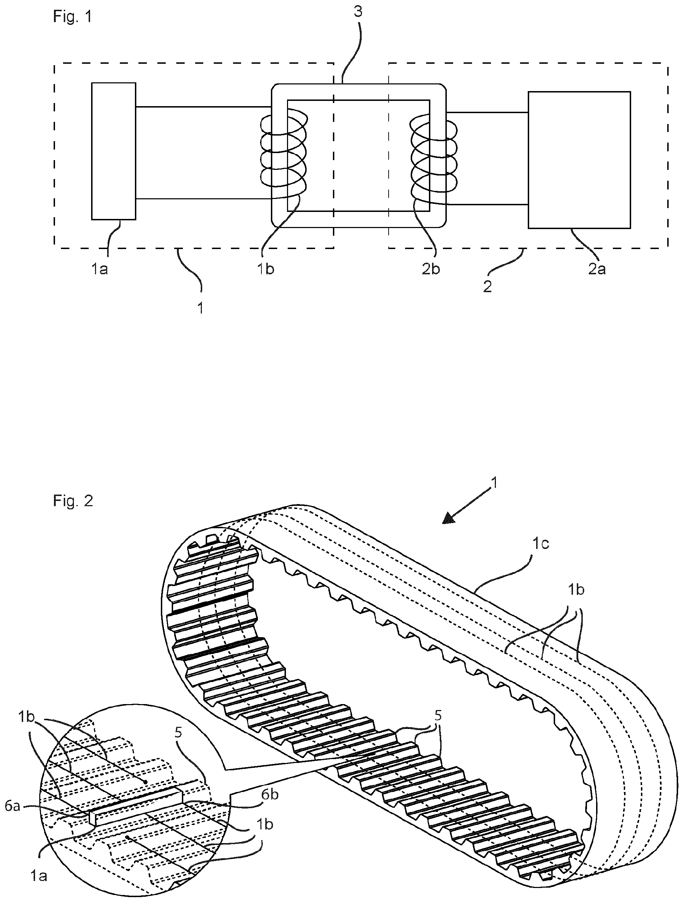

In Figur 1 ist schematisch ein Zahnriemen 1 gezeigt, der nach dem Transformatorprinzip mit einer Speiseanordnung 2 gekoppelt ist. Die Speiseanordnung 2 weist eine Wechselspannungsquelle 2a sowie eine Speisespule 2b auf, die mit der Wechselspannungsquelle 2a gekoppelt ist. Ein ringförmiger Spulenkern 3 durchgreift die Speisespule 2. In dieser Anordnung wirkt die Speisespule 2 als Primärspule eines Transformators mit dem Spulenkern 3.

Die Sekundärspule wird innerhalb des Zahnriemens 1 gebildet. In dem Zahnriemen 1 ist eine elektronische Komponente 1a angeordnet, die einen Sensor enthält, insbesondere einen Temperatursensor oder einen Beschleunigungssensor. In dem Zahnriemen 1 ist eine Sekundärspule der Transformatoranordnung durch den Zugträger 1b gebildet, der sowohl die Zugbelastung des Zahnriemens aufnimmt als auch die Sekundärspule des Transformators für die induktive Versorgung bildet. Dafür durchgreift der Spulenkern 3 die Windungen der Sekundärspule, die durch den Zugträger 1b gebildet werden. Auf diese Weise wird eine induktive Spannungsankopplung in dem Zahnriemen 1 vorgenommen, wodurch die elektronische Komponente 1a mit Wechselspannung versorgt wird. In der elektronischen Komponente 1a kann eine Gleichrichtanordnung angeordnet sein, um die Wechselspannung in eine Gleichspannung zu wandeln. Außerdem können weitere elektronische Komponenten, beispielsweise drahtlose Kommunikationseinrichtungen, Energiespeicher und weitere Sensoren vorhanden sein.

Figur 2 zeigt eine perspektivische Darstellung eines Ausführungsbeispiels eines Zahnriemens 1 gemäß der Erfindung. Der Zahnriemen ist als endloser Zahnriemen ausgebildet, wobei auf seiner nach innen weisenden Seite die Zähne des Zahnriemens in regelmäßigen Abständen in der Kunststoffmatrix 1c des Zahnriemens ausgebildet sind. Ein Zugträger 1b verläuft in einer schraubenlinienförmigen Weise innerhalb der Kunststoffmatrix 1c des Zahnriemens 1 und bildet auf diese Weise eine Sekundärspule mit mehreren Windungen. Die elektronische Komponente 1a ist in einem Zahn 5 des Zahnriemens 1 aufgenommen, wie die Detailvergrößerung in Figur 2 zeigt. Die elektronische Komponente 1a, welche wenigstens einen Sensor enthält, ist mit dem Zugträger 1b über wenigstens zwei Abgriffpunkte 6a, 6b gekoppelt, während der Mittelabschnitt des Zugträgers 1b kontaktlos unter der elektronischen Komponente 1a her verläuft. Auf diese Weise wird eine Sekundärspule durch den Zugträger 1b gebildet, welche zur Energieversorgung mit der elektronischen Komponente 1a gekoppelt ist. Diese Anordnung ist dazu geeignet, nach dem Transformatorprinzip eingekoppelte Spannungen über die Abgriffe 6a, 6b an die elektronische Komponente 1a anzulegen.

In einer nicht dargestellten Abwandlung ist es auch möglich, den Zugträger mit mehr als zwei Abgriffen an die elektronische Komponente zu koppeln, z. B. um versagende Abschnitte des Zugträgers bedarfsweise zu überbrücken oder um mehrere Spannungsabgriffe zu getrennten Windungen des Zugträgers herzustellen.

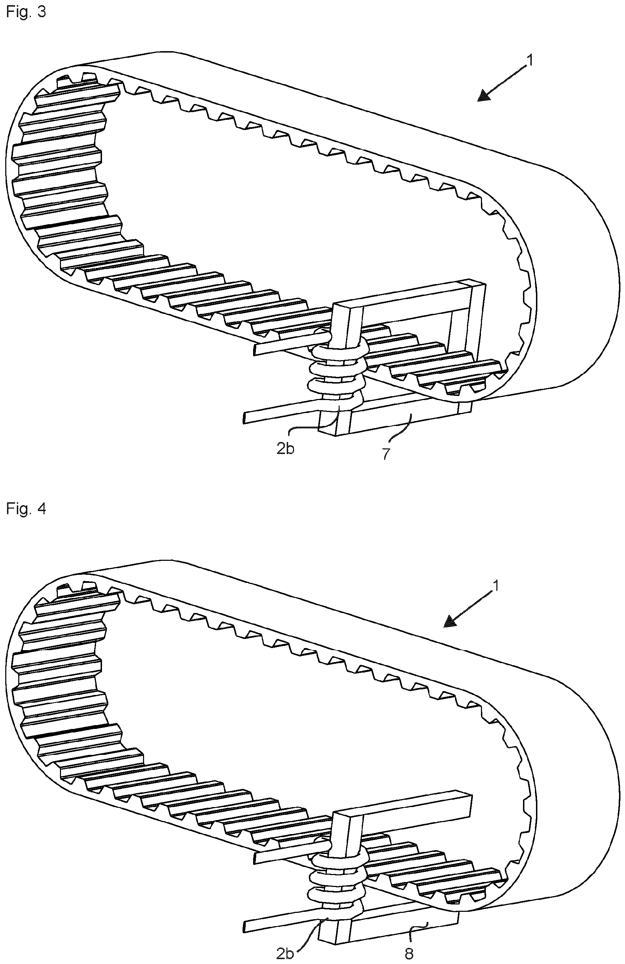

Figur 3 zeigt den Zahnriemen aus Figur 2, wobei eine Primärspule 2b mit einem ringförmigen Spulenkern 7 versehen ist. Der Zahnriemen 1 verläuft durch die innere Öffnung des Spulenkerns 7. Da der Magnetfluss der Primärspule 2b, die mit einer Versorgungsspannung gekoppelt ist, zu wesentlichen Teilen durch den Spulenkern 7 verläuft, besteht eine intensive Transformatorkopplung zwischen der Primärspule 2b und dem Zugträger 1b, welcher in dem Zahnriemen 1 verläuft (siehe Fig. 2) .

In Figur 4 ist eine abgewandelte Anordnung dargestellt. Bei dieser Anordnung ist der Spulenkern 8, der die Primärspule 2b durchgreift, als U-förmiger Spulenkern 8 ausgebildet. Auch in dieser Gestaltung wird eine Kopplung gemäß Transformatorprinzip erreicht, wobei eine etwas geringere induktive Kopplung bereitgestellt wird, jedoch eine bessere mechanische Zugänglichkeit des Zahnriemens erreicht ist. Es ist in Figur 3 erkennbar, dass der Spulenkern 8 problemlos vom Zahnriemen abgezogen werden kann, ohne bauliche Veränderungen vornehmen zu müssen.

## Patentansprüche

1. Zahnriemen (1) mit wenigstens einem Zugträger (1b) und einer den Zugträger wenigstens teilweise ummantelnden Kunststoffmatrix (1c),
wobei der wenigstens eine Zugträger (1b) sich in der Kunststoffmatrix (1c) in eine Laufrichtung des Zahnriemens erstreckt und wobei in der Kunststoffmatrix (1c) und quer zu der Laufrichtung Zähne (5) des Zahnriemens ausgebildet sind,
wobei der Zugträger (1b) aus einem elektrisch leitfähigen Material gebildet ist und wobei die Kunststoffmatrix (1c) aus einem elektrisch isolierenden Material gebildet ist,
wobei der Zahnriemen wenigstens eine elektronische Komponente (1a) aufweist, welche in die Kunststoffmatrix (1c) eingebettet ist und wenigstens einen Sensor aufweist, welcher Daten zu einem Zustandsparameter des Zahnriemens erfasst
**dadurch gekennzeichnet,**
**dass** die wenigstens eine elektronische Komponente (la) über wenigstens zwei Spannungsabgriffe (6a, 6b) mit dem Zugträger (1b) gekoppelt ist, um eine in den Zugträger (1b) induzierte Spannung zur zur Energieversorgung der wenigstens einen elektronischen Komponente (1a) abzugreifen.

2. Zahnriemen nach Anspruch 1, wobei der Zahnriemen als endloser Zahnriemen ausgebildet ist.

3. Zahnriemen nach Anspruch 1 oder 2, wobei die wenigstens eine elektronische Komponente (1a) in einem der Zähne (5) des Zahnriemens angeordnet ist.

4. Zahnriemen nach einem der vorangehenden Ansprüche, wobei die elektronische Komponente (1a) wenigstens einen Temperatursensor und/oder wenigstens einen Beschleunigungssensor aufweist.

5. Zahnriemen nach einem der vorangehenden Ansprüche, wobei die elektronische Komponente (1a) eine drahtlose Kommunikationseinrichtung aufweist, welche Daten von dem Sensor in einem elektromagnetischen Kommunikationssignal aussendet.

6. Zahnriemen nach einem der vorangehenden Ansprüche, wobei die wenigstens eine elektronische Komponente (1a) einen Energiespeicher und eine Ladeschaltung aufweist, um den Energiespeicher unter Spannungsversorgung durch die induzierte Spannung in dem Zugträger zu laden.

7. Zahnriemen nach einem der vorangehenden Ansprüche, wobei der Zugträger (1b) in der Kunststoffmatrix (1c) entlang der Laufrichtung mehrere Umläufe aufweist und sich dabei entlang einer Schraubenlinie um eine Achse quer zu der Laufrichtung erstreckt, so dass in der Kunststoffmatrix (1c) durch den Zugträger (1b) eine Spule mit einer Mehrzahl von Windungen gebildet ist.

8. Anordnung mit einem Zahnriemen gemäß einem der Ansprüche 1 bis 7,
wobei der Zahnriemen mit einem Antrieb gekoppelt ist und entlang eines Transportweges eingespannt ist,
wobei entlang des Transportweges und benachbart zu dem Zahnriemen eine Erregereinrichtung (2b) angeordnet ist, welche ein magnetisches Wechselfeld erzeugt, welches den Zahnriemen wenigstens teilweise durchgreift.

9. Anordnung gemäß Anspruch 8, wobei die Erregereinrichtung als wechselspannungsversorgte Speisespule (2b) ausgebildet und ortsfest angeordnet ist, wobei die Speisespule einen Spulenkern (3; 7; 8) aufweist,
wobei der Spulenkern (3; 7; 8) den Zahnriemen entlang des Transportweges wenigstens abschnittsweise umgreift oder übergreift oder untergreift, so dass durch die Speisespule (2b), den Spulenkern (3; 7; 8) und den Zugträger (1b) eine Transformatoranordnung gebildet ist.

10. Anordnung nach Anspruch 9, wobei der Spulenkern (8) U-förmig ausgebildet ist und der Transportweg des Zahnriemens zwischen den freien Schenkeln des Spulenkerns (8) verläuft, so dass der Zahnriemen wenigstens abschnittsweise zwischen den freien Schenkeln angeordnet ist.

11. Anordnung nach Anspruch 9, wobei der Spulenkern (3; 7) ringförmig ausgebildet ist und der Transportweg des Zahnriemens durch eine innere Öffnung des ringförmigen Spulenkerns (3; 7) verläuft.

## Claims

1. A toothed belt (1) with at least one tension member (1b) and a plastic matrix (1c) at least partially encasing the tension member,
wherein the at least one tension member (1b) extends in the plastic matrix (1c) in a running direction of the toothed belt and wherein teeth (5) of the toothed belt are formed in the plastic matrix (1c) and normal to the running direction,
wherein the tension member (1b) is formed from an electrically conductive material and wherein the plastic matrix (1c) is formed from an electrically insulating material,
wherein the toothed belt comprises at least one electronic component (1a), which is embedded in the plastic matrix (1c) and which comprises at least one sensor, which gathers data relating to the status parameters of the toothed belt,
**characterised in that**
the at least one electronic component (1a) is coupled via at least two voltage taps (6a, 6b) to the tension member (1b), in order to tap a voltage induced in the tension member (1b) for the power supply of the at least one electronic component (1a).

2. The toothed belt according to claim 1, wherein the toothed belt is constituted as a continuous toothed belt.

3. The toothed belt according to claim 1 or 2, wherein the at least one electronic component (1a) is arranged in one of the teeth (5) of the toothed belt.

4. The toothed belt according to any one of the preceding claims, wherein the electronic component (1a) comprises at least one temperature sensor and/or at least one acceleration sensor.

5. The toothed belt according to any one of the preceding claims, wherein the electronic component (1a) comprises a wireless communication device, which transmits data from the sensor in an electromagnetic communication signal.

6. The toothed belt according to any one of the preceding claims, wherein the at least one electronic component (1a) comprises an energy storage unit and a charging circuit, in order to charge the energy storage unit with a voltage supply through the induced voltage in the tension member.

7. The toothed belt according to any one of the preceding claims, wherein the tension member (1b) in the plastic matrix (1c) comprises a plurality of revolutions along the running direction and extends along a helical line about an axis normal to the running direction, so that a coil with a plurality of windings is formed in the plastic matrix (1c) is formed by the tension member (1b) .

8. An arrangement with a toothed belt according to any one of claims 1 to 7,
wherein the toothed belt is coupled with a drive and is stretched along a transport path,
wherein an excitation device (2b) is arranged along the transport path and adjacent to the toothed belt, said excitation device generating a magnetic alternating field, which engages at least partially through the toothed belt.

9. The arrangement according to claim 8, wherein the excitation device is constituted as a supply coil (2b) supplied by alternating voltage and is arranged fixed, wherein the supply coil comprises a coil core (3; 7; 8),
wherein the coil core (3; 7; 8) at least partially engages around or engages over or engages under the toothed belt along the transport path, so that a transformer arrangement is formed by the supply coil (2b), the coil core (3; 7; 8) and the tension member (1b) .

10. The arrangement according to claim 9, wherein the coil core (8) is formed U-shaped and the transport path of the toothed belt runs between the free legs of the coil core (8), so that the toothed belt is arranged at least in sections between the free legs.

11. The arrangement according to claim 9, wherein the coil core (3; 7) is formed in an annular shape and the transport path of the toothed belt runs through an inner opening of the annular coil core (3; 7).

## Revendications

1. Courroie dentée (1) avec au moins un support de traction (1b) et au moins une matrice en matière plastique (1c) enveloppant au moins en partie le support de traction, sachant qu'au moins un support de traction (1b) s'étend dans la matrice en matière plastique (1c) dans une direction de marche de la courroie dentée et sachant que des dents (5) de la courroie dentée sont constituées dans la matrice en matière plastique (1c) et transversalement à la direction de marche,
sachant que le support de traction (1b) est formé dans un matériau électro-conducteur et sachant que la matrice en matière plastique (1c) est formée dans un matériau isolant électriquement,
sachant que la courroie dentée comporte au moins un composant électronique (la), lequel est incorporé dans la matrice en matière plastique (1c) et comporte au moins un capteur, lequel saisit des données relatives à un paramètre d'état de la courroie dentée,
**caractérisée en ce qu'**
au moins un composant électronique (1a) est couplé par au moins deux prises de tension (6a, 6b) au support de traction (1b) pour prélever une tension induite dans le support de traction (1b) pour l'alimentation en énergie d'au moins un composant électronique (1a).

2. Courroie dentée selon la revendication 1, sachant que la courroie dentée est constituée comme une courroie dentée sans fin.

3. Courroie dentée selon la revendication 1 ou 2, sachant qu'au moins un composant électronique (1a) est disposé dans une des dents (5) de la courroie dentée.

4. Courroie dentée selon l'une quelconque des revendications précédentes,
sachant que le composant électronique (1a) comporte au moins un capteur de température et/ou au moins un capteur d'accélération.

5. Courroie dentée selon l'une quelconque des revendications précédentes,
sachant que le composant électronique (1a) comporte un dispositif de communication sans fil, lequel envoie des données du capteur dans un signal de communication électromagnétique.

6. Courroie dentée selon l'une quelconque des revendications précédentes,
sachant qu'au moins un composant électronique (1a) comporte un accumulateur d'énergie et un circuit de charge pour charger l'accumulateur d'énergie sous alimentation en tension par la tension induite dans le support de traction.

7. Courroie dentée selon l'une quelconque des revendications précédentes,
sachant que le support de traction (1b) comporte dans la matrice en matière plastique (1c) plusieurs tours le long de la direction de marche et s'étend à cet effet le long d'une ligne hélicoïdale autour d'un axe transversalement à la direction de marche de telle manière que dans la matrice en matière plastique (1c) une bobine est formée à travers le support de traction (1b) avec une pluralité de spires.

8. Agencement avec une courroie dentée selon l'une quelconque des revendications 1 à 7,
sachant que la courroie dentée est couplée à un système d'entraînement et est tendue le long d'une trajectoire de transport,
sachant que le long de la trajectoire de transport et à proximité de la courroie dentée est disposé un dispositif d'excitation (2b), lequel produit un champ magnétique alternatif, lequel traverse au moins en partie la courroie dentée.

9. Agencement selon la revendication 8, sachant que le dispositif d'excitation est constitué comme une bobine d'alimentation (2b) alimentée en tension alternative et est disposé de façon fixe, sachant que la bobine d'alimentation comporte un noyau de bobine (3, 7, 8), sachant que le noyau de bobine (3, 7, 8) entoure la courroie dentée ou vient en prise dessus ou en dessous au moins en partie le long de la trajectoire de transport de telle manière qu'un agencement de transformateur est formé par la bobine d'alimentation (2b), le noyau de bobine (3, 7, 8) et le support de traction (1b).

10. Agencement selon la revendication 9, sachant que le noyau de bobine (8) est constitué en forme de U et la trajectoire de transport de la courroie dentée passe entre les branches libres du noyau de bobine (8) de telle manière que la courroie dentée est disposée au moins pour parties entre les branches libres.

11. Agencement selon la revendication 9, sachant que le noyau de bobine (3, 7) est constitué de forme annulaire et la trajectoire de transport de la courroie dentée passe à travers une ouverture intérieure du noyau de bobine (3, 7) de forme annulaire.
